(19) Europäisches Patentamt / European Patent Office / Office européen des brevets

(11) **EP 1 745 947 B1**

(12) **EUROPEAN PATENT SPECIFICATION**

(45) Date of publication and mention
of the grant of the patent:
**14.10.2009 Bulletin 2009/42**

(51) Int Cl.:
***B60C 19/00*** *(2006.01)*

(21) Application number: **06013738.7**

(22) Date of filing: **03.07.2006**

(54) **Pneumatic tire with noise absorbing insert**

Luftreifen mit geräuschabsorbierendem Einsatz

Pnaumatique avec insert de silencieux

(84) Designated Contracting States:
**DE FR**

(30) Priority: **20.07.2005 JP 2005210346**

(43) Date of publication of application:
**24.01.2007 Bulletin 2007/04**

(73) Proprietor: **Sumitomo Rubber Industries, Ltd.
Kobe-shi,
Hyogo-ken (JP)**

(72) Inventor: **Yukawa, Naoki
Chuo-ku
Kobe-shi
Hyogo-ken (JP)**

(74) Representative: **Manitz, Finsterwald & Partner
GbR
Postfach 31 02 20
80102 München (DE)**

(56) References cited:
**EP-A- 1 577 123          JP-A- 7 266 814
JP-A- 2000 127 709**

**Description**

The present invention relates to a low noise pneumatic tire, more particularly to a combination of a pneumatic tire with a round tread profile and a noise damper adhered to the radially inner face of the tread portion.

In general, motor-cross motorcycle tires are provided with tread patterns having large negative ratio based on tread blocks and/or lugs, and inevitably, a large tire noise is generated during running on the well paved roads. Further, the engine noise of the motor-cross motorcycles is usually large. Therefore, a demand for low-noise tires is scarce in this tire category.

In the case of street motorcycle tires, however, the demand for low-noise tires is increasing because motorcycles such as so called "big scooter" of which engine noise, mechanical noise and wind noise are reduced like a passenger car become popular in recent years.

When compared with the motor-cross motorcycle tires, the street motorcycle tires have relatively small negative ratios, in other words, the tread face is relatively smooth. Accordingly, the tire noise during running on the well paved roads becomes smaller by nature.

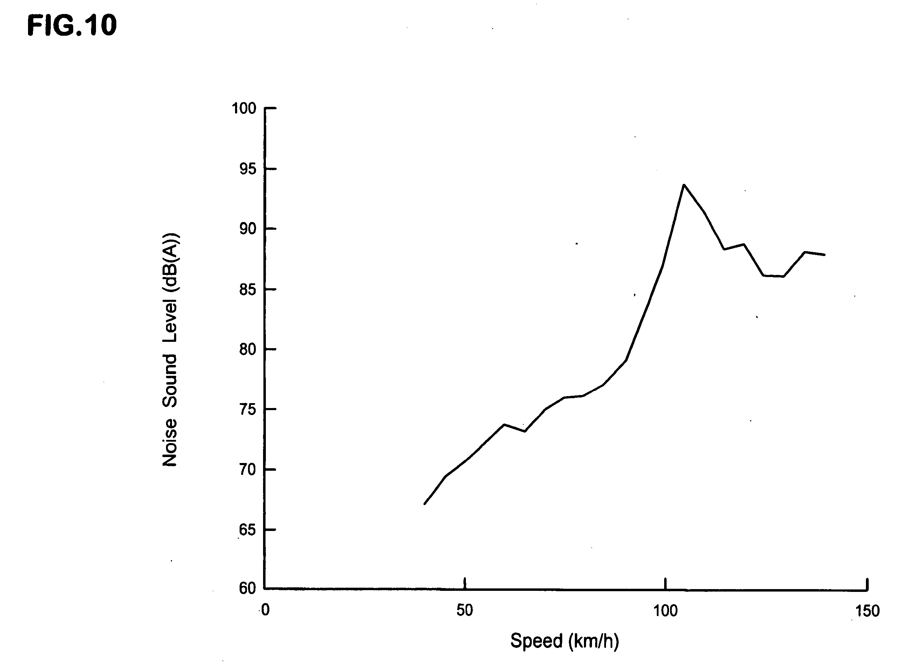

Despite such a low-noise nature, the tires sometimes generate a large noise at a certain running speed as shown in Fig.10.

As a result of investigation, it was found that the main cause of the large noise is a resonance of air in the tire cavity of a rear tire. In the case of tires used in the investigation, the noise became increased when the frequency (645 Hz) of the 3rd-order resonance became near the primary frequency of tire vibration during running at a certain speed (105 km/hour) which primary frequency is varied by the running speed, depending on the tread pattern pitches.

In the passenger car tire art, it is known to be effective for reducing the tire cavity resonance to dispose a noise damper in the tire cavity, for example, as disclosed in us Patent 6726289.

In the case of motorcycle tires, the tread portion is curved with a relatively small radius when compared with the passenger car tires, and the inner face of the tread portion has accordingly a small radius of curvature in the tire meridian section. Therefore, when adhering such a damper to the inner face of the tread portion, the damper especially the edge portion thereof is very liable to get out of order, and as the width of the damper increases, the rate of occurrence of wrinkles increases. Thus, the durability as well as commercial value is decreased. Further, the efficiency of the adhesion work tends to be lowered.

Relevant prior art is also disclosed by JP 07 266814 A and JP 2000 127 709 A.

It is therefore, an object of the present invention to provide a noise damper which is easy to adhere to the curved tread portion's inner face in good order and thus suitable for motorcycle tires, and also a low-noise pneumatic tire with a noise damper in which the durability of the noise damper and the commercial value of the tire can be improved.

This object is achieved by a combination having the features of claim 1.

Therefore, the noise damper can be easily adhered to the inner face of the curved tread portion in good order without wrinkle, and thus deterioration of the damper durability and degrading of the tire commercial value can be prevented.

Embodiments of the present invention will now be described in detail in conjunction with the accompanying drawings, in which:

Fig.1 is a cross sectional view of an assembly of a motorcycle tire and a noise damper not according to the present invention;

Fig.2 is a cross sectional view of the noise damper in its stress-free state;

Fig.3 is a cross sectional view of another example of a noise damper not according to the present invention in its stress-free state;

Fig.4 is a cross sectional view of an example of the noise damper according to the present invention in its stress-free state;

Fig.5 is a cross sectional view of yet still more example of the noise damper according to the present invention in its stress-free state;

Fig.6 is a cross sectional view of the assembly shown in Fig.1 taken along the tire equatorial plane showing an example of the arrangement of the circumferential ends of the noise damper;

Fig.7 is an enlarged cross sectional view showing a carrier type double-sided adhesive tape;

Fig.8 is an enlarged cross sectional view showing a transfer type double-sided adhesive tape;

Figs.9A, 9B, 9C, 9D and 9E are cross sectional views of noise dampers used in the undermentioned comparative tests; and

Fig.10 is a graph showing the overall noise sound level of a motorcycle rear tire as a function of the running speed.

In the drawings, pneumatic tire 1 according to the present invention comprises: a tread portion 2 with tread edges Te; a pair of axially spaced bead portions 4; a pair of sidewall portions 3 extending between the tread edges Te and the bead portions 4; a carcass 6 extending between the bead portions 4; and a tread reinforcing belt disposed radially outside the carcass in the tread portion.

In this example, the tire 1 is a street motorcycle tire of which tread portion 2 is provided with grooves (not shown) so as to form a tread face 2S having a relatively small negative ratio thus which is relatively smooth when compared with those of the motor-cross motorcycle tires.

The bead portions 4 are each provided therein with a bead core 5 and a bead apex 6 on the radially outside thereof. The bead apex 6 is made of a hard rubber extending radially outwardly from the bead core 5 while tapering towards its radially outer end. The radially outer end reaches to a midpoint of the radial extent of the sidewall portion to reinforce the bead portion and lower sidewall portion.

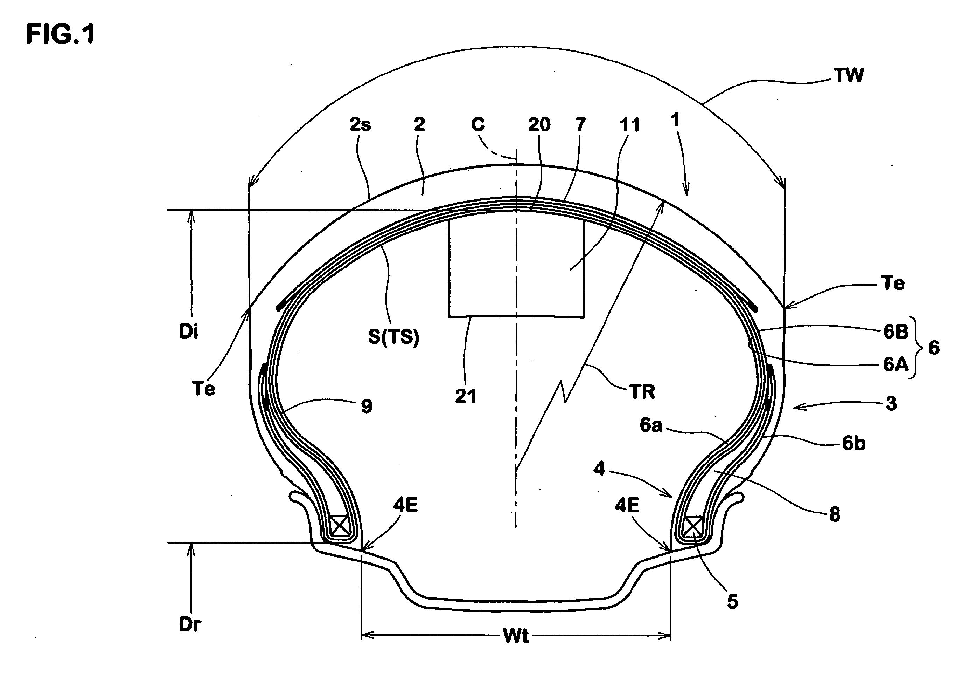

The carcass 6 comprises at least one ply 6A, 6B (in the Fig.1 example, two plies 6A and 6B) of organic fiber cords arranged at an angle of 70 to 90 degrees with respect to the tire equator C, and extending between the bead portions 4 through the tread portion 2 and sidewall portions 3, and turned up around the bead core 5 in each bead portion 4 from the inside to the outside of the tire so as to form a pair of turned up portions 6b and one main portion 6a therebetween.

The inside of the carcass 6 is covered with an inner liner 9 made of an air-impermeable rubber, forming the inner surface s of the tire.

As shown in Fig.1 which shows a meridian section of the tire in its normally inflated unloaded state, the tread portion 2 is curved with a relatively small radius TR of curvature when compared with tires in other categories such as passenger car tires, and as a result, the maximum cross sectional width of the tire lies between the tread edges Te. From one of the tread edges Te to the other, the tread portion 2 has a substantially constant overall thickness, therefore, the inner face of the tread portion also has a relatively small radius of curvature less than the above-mentioned radius TR.

The tread portion 2 is provided with an arched profile which can be made up of a single radius curve or a multi-radius curve.

In either case, the tread radius TR defined as follows is in a range of from 50 to 220 mm, wherein the tread radius TR is the radius of a circle passing three points on the tread face 2S in the meridian section of the tire in the normally inflated unloaded state of the tire. The three points are a point on the tire equator C and a point on each side of the tire equator, and the distance therebetween is, along the tread face, 1/4 of the tread width TW as measured between the tread edges Te along the tread face.

Here, the normally-inflated unloaded state of the tire is such that the tire is mounted on a standard wheel rim and inflated to a standard pressure but loaded with no tire load. In addition, a normally-loaded state is such that the tire is mounted on the standard wheel rim and inflated to the standard pressure and loaded with a standard load.

The standard wheel rim is a wheel rim officially approved for the tire by standard organization, i.e. JATMA (Japan and Asia), T&RA (North America), ETRTO (Europe), STRO (Scandinavia) and the like. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load capacity" in ETRTO, the maximum value given in the above-mentioned table in TRA or the like.

In this application, unless otherwise noted, the "dimensions" of respective parts or portions of the tire are measured in the normally inflated unloaded state of the tire.

In order to provide a hoop effect across the almost entire width TW of the curved tread portion 2, a spiral band 7 is used as the tread reinforcing belt in this embodiment.

The spiral band 7 is formed by spirally winding one or more organic fiber cords at a small angle of at most 5 degrees with respect to the tire equator C. The band cord(s) is wound into a single layer or ply in this example, but winding into multi layers partially or wholly is also possible. Preferably, the spiral band 7 extends over 70%, preferably over 80% of the tread width TW.

In the case of large-sized heavy motorcycles, however, it is preferable that a cross-ply breaker is disposed between the band 7 and the carcass 6 or alternatively a cross-ply breaker is disposed instead of the band 7. The cross-ply breaker comprises two plies each made of organic fiber cords laid parallel with each other at an angle of 10 to 60 degree with respect to the tire equator C but crosswise to the cords in the next ply.

According to the present invention, a noise damper 11 is adhered to the inner face TS of the tread portion 2.

As to the material of the noise damper 11, preferably used are sponge-like porous materials prepared by foaming a rubber or a synthetic resin, for instance, synthetic resin foams (such as ether based polyurethane foam, ester based polyurethane foam and polyethylene foam), rubber foams (such as chloroprene rubber (CR) foam, ethylene-propylene rubber (EPDM) foam and nitrile rubber (NBR) foam) and the like.

From the viewpoints of sound absorption, light weight, durability, and controllability of foaming, polyethylene foam, and polyurethane foam especially ether based polyurethane foam are preferably used. The closed-cell type foams can be used, but open-cell type foams are preferred.

Aside from such spongy materials (i.e., rubber foams or sponges and synthetic resin foams or sponges), there may be used unwoven fabrics made from fibers (synthetic fibers, plant fibers and/or animal fibers) for example by loosely intertwining or bonding the fibers.

In any case, the specific gravity of the damper material is at most 0.060, preferably less than 0.045, more preferably less than 0.040, but at least 0.005, preferably more than 0.010, more preferably more than 0.016. If the specific gravity is less than 0.005 or more than 0.060, the effect to control the cavity resonance tends to decrease.

The damper material will have a high water absorptivity as its nature. Therefore, if the noise damper adhered to the tire gets wet with rainwater during the storage of the tire or in transit, and the tire is mounted on a rim in the state that water is absorbed by the noise damper, then there arise problems that weight balance of the wheel is impaired, and the absorbed water penetrates into the tire rubber and wheel rim.

In order to prevent such a water absorption, therefore, water repelling treatment can be preferably applied to the noise damper 11. For this purpose, for example, a known water repellent can be incorporated into a resin or a rubber when preparing the spongy material therefrom. Preferable water repellents are, for example, esters of a monohydric alcohol with an aliphatic or alicyclic dicarboxylic acid.

The damper material is formed in a form of strip having a predetermined length, and the damper material is bent along the inner circumference of the tire to be adhered to the inner face TS of the tread portion 2.

In order to prevent the noise damper 11 from being wrinkled, the shape and size of the damper material are specifically defined as follows.

* First example

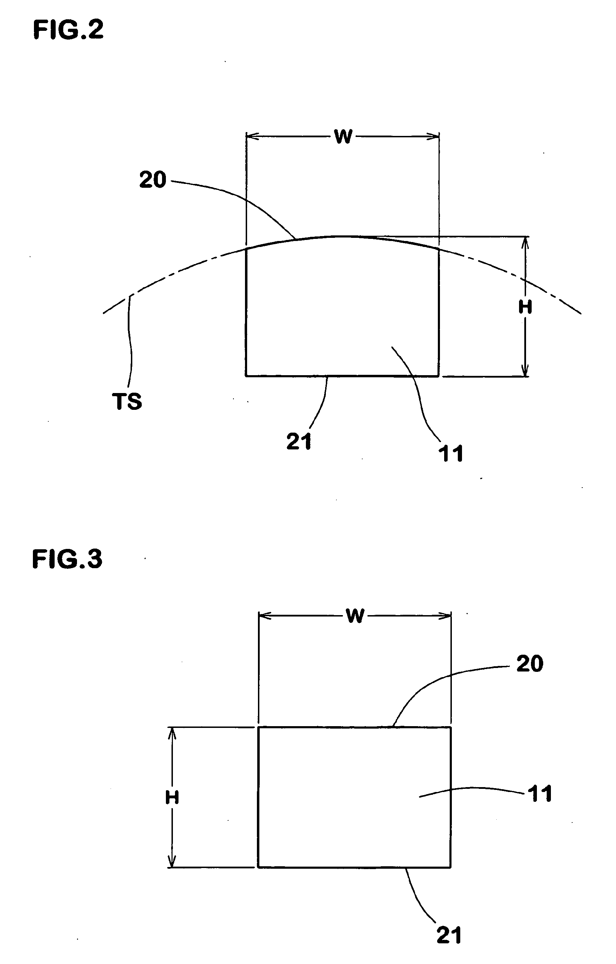

Fig.2 shows a first example of the damper material, wherein in its stress-free state not yet adhered, the surface 20 to be adhered (hereinafter, the joint surface 20) is convexly curved similarly to the curvature of the inner face TS so as to closely fit to the inner face TS.

If the maximum width w of the damper material approaches the width between the bead toes 4E, insertion of the damper material into the tire cavity will become difficult and the efficiency of adhesion work becomes lowered. Therefore, the width w is preferably set in a range of not more than 80 % of the axial width wt between the bead toes 4E.

* second example

If the joint surface 20 has a part not curved or a flat part, the width of the flat part has to be not more than 30 % of the tread width TW along the tread face 2s. If more than 30 %, the above-mentioned problems such as wrinkles are liable to occur.

As shown in Fig.3, if the entirety of the joint surface 20 is flat, then the width w of the damper material has to be not more than 30 % of the tread width TW. In this case, as the width w is relatively narrow, in order to obtain a sufficient damping effect, the thickness H is not less than 5.0 mm, and preferably at least 0.6 times the width w.

* Third example

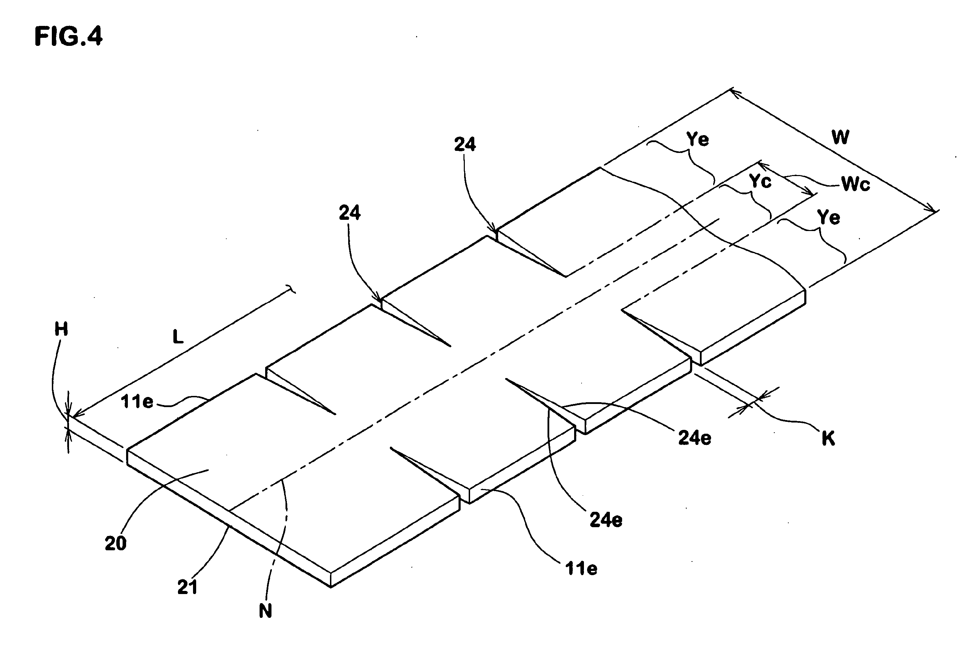

If the damper material whose joint surface 20 is not curved or flat and width w is more than 30 % of Tw is to be used, then as shown in Fig.4, each of the axial edges 11e has to be provided along the length thereof with V-shaped notches 24 at regular intervals.

In spite of the notches, if the width w exceeds 90 % of TW, as the adhesion work becomes difficult, it also becomes difficult to fully prevent wrinkles and disorder at the edges. Therefore, the width w is preferably not more than most 90 %, more preferably less than 75 % of the tread width TW.

The notch 24 extends from the side edge 11e of the damper material toward the center line N thereof, while decreasing the gap (K) between the opposed edges 24e thereof, and terminates before the center line N at an axial distance Ye from the side edge 11e. The noise damper 11 accordingly has a continuous central portion Yc between the axially inner ends of the notches 24, and side portions Ye divided by the notches 24.

If the width wc of the central portion Yc is more than 30 % of the tread width Tw, wrinkles tends to occur in the central portion Yc. If the width wc is less than 20 % of the width w of the noise damper 11, the noise damper may lack strength, so breaking is easy to occur during adhesion working and the handling property is impaired. Therefore, it is preferable that the width wc of the central portion Yc is not more than 30 % of the tread width TW, but not less than 20 % of the width w of the damper material.

Upon adhesion of the noise damper, the opposed edges 24e of each notch 24 approach each other, whereby the difference in the circumferential length occurring between the different tire-axial positions is absorbed, and generation of wrinkles can be prevented.

In the example shown in Fig.4, the edges 24e are straight when viewed normal to the joint surface 20. However, the edges 24e can be convexly curved lines so as to increase the gap (K) in an accelerated manner toward the side edge 11e. This will be particularly preferable in the case that the width w is relatively large.

The gap (K) is determined according to the curvature of the tread inner surface TS, the width w and length L of the noise damper 11 and the number of notches 24 so that the gap (K) becomes almost zero upon adhesion and the opposed edges 24e are not overlapped each other.

The number of the notches 24 formed at each edge 11e is preferably set in a range of from 10 to 30 (namely 36 to 12 degree pitch around the tire axis).

As to the positions of the notches 24, in the example shown in Fig.4, the notches 24 at one edge 11e are aligned with those at the other edge 11e. But, the notches 24 can be staggered to improve the strength of the damper material. In the later case, the shift of the notches 24 at one edge 11e from the notches 24 at the other edge 11e is preferably in a range of 30 to 70 % of the pitch of the notches, preferably 50 % of the pitch of the notches in the longitudinal direction.

In the case of the wide noise damper, if the thickness H thereof is too large, the noise damper is easy to peeled off by its resilience. Therefore, it is preferable that the thickness H of the noise damper 11 is not more than 45 mm and not more than 50 % of the width W.

\* Fourth example

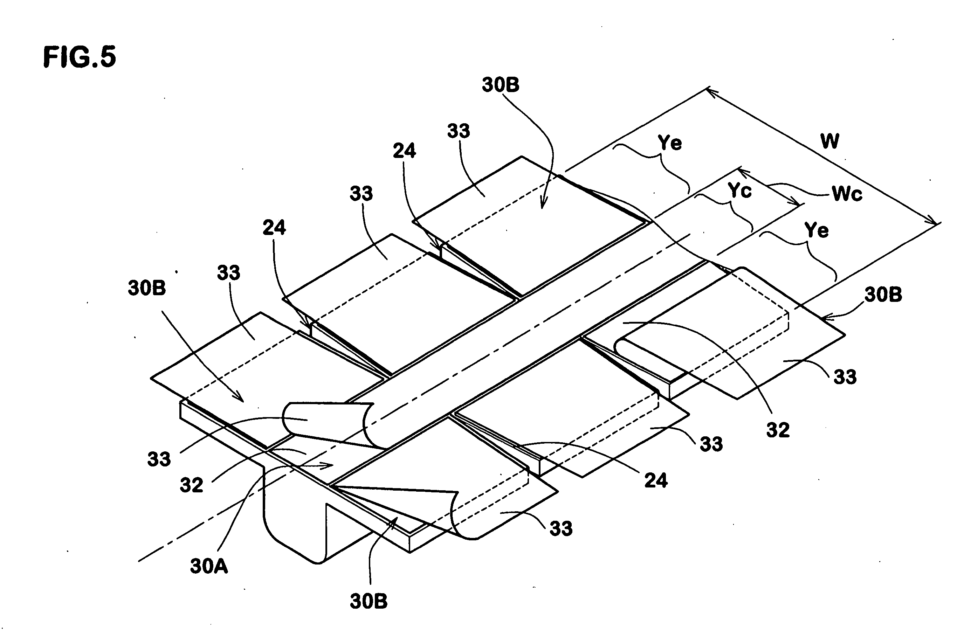

Fig.5 shows a further example of the noise damper which is a modification of the Fig.4 example. In this example, the thickness of the central portion Yc is increased to have a T-shaped cross sectional shape. The thickness of the central portion Yc is substantially constant. The thickness of the side portions Ye is also substantially constant.

In either case or example, even if the volume V2 is increased over 20 % of the tire cavity volume V1, the cavity resonance suppressing effect is not further increased although the weight and cost are increased. Therefore, the total volume v2 of the noise damper 11 is preferably not more than 20 %, but more than 0.4%, preferably more than 2 %, more preferably more than 4 %, still more preferably more than 8 % of the volume V1 of the cavity of the tire.

Incidentally, the volume V1 of the cavity can be obtained by the following approximate expression (1):

$$V = A \times \{(Di - Dr)/2 + Dr\} \times pi$$

wherein

"A" is the cross sectional area of the cavity (which can be obtained by computed tomography scan for example),

"Di" is the maximum diameter of the cavity,

"Dr" is the wheel rim diameter, and

"pi" is the circle ratio.

These parameters are measured under the normally-inflated unloaded state of the tire.

Further, the cross sectional shape of the damper material when adhered, namely, the noise damper 11 has to be symmetrical about the tire equator C. Accordingly, the cross sectional shape of the damper material is symmetrical about the centerline thereof.

If the cross sectional shape is longer in the tire radial direction than in the tire axial direction, the damper tends to become unstable. It is therefore, preferable that the maximum radial thickness H of the damper is not more than the width w measured at the joint surface 20 to be adhered. Furthermore, a cross sectional shape such that the maximum axial width does not occur at any position other than between the edges of the joint surface 20 is preferred from the viewpoint of the stability.

More specifically, aside from rectangles, shapes of which maximum axial width occurs between the edges of the joint surface 20, for example, trapezoid, semioval, triangle and the like can be used.

Such cross sectional shape continues from one of the circumferential ends E to the other of the damper 11.

After adhered, the circumferential ends E of the damper can be jointed in a form of a splice joint, butt joint or the like, using an adhesive agent or the like.

Further, it is also possible to make the ends E unjointed, leaving a minimum gap therebetween to prevent their friction due to tire deformation during running.

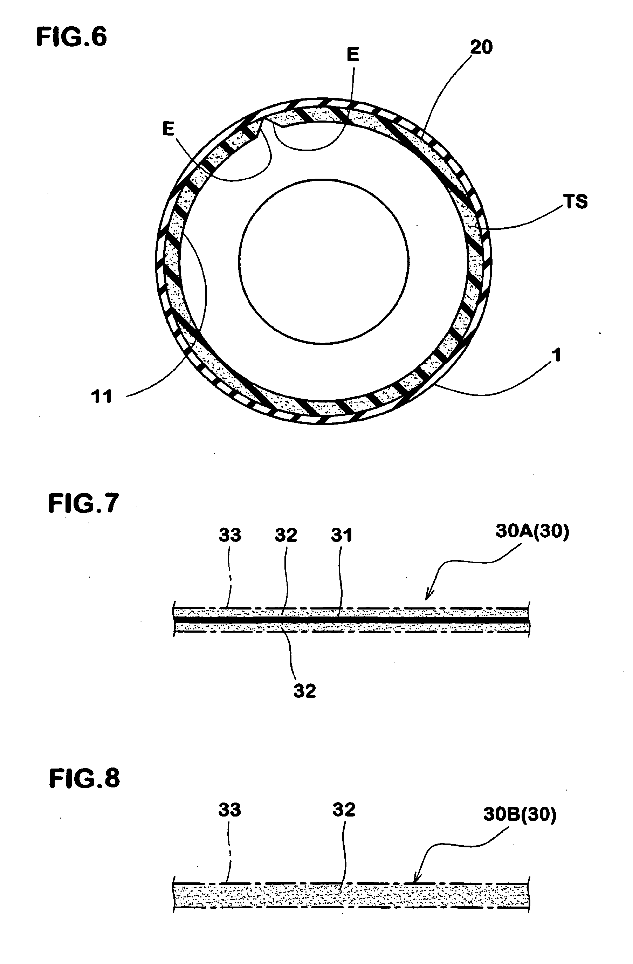

In the case that the damper material is relatively thick and the ends are not jointed, in order to prevent the ends E from being peeled off by its resiliency, the end portions may be decreased in the thickness as shown in Fig.6.

From the viewpoints of cost and workability, fixing of the noise damper 11 to the tread inner surface TS is preferably performed by using an adhesive agent or a double-sided adhesive tape.

As to the adhesive agent, synthetic rubber-based adhesive agents (such as a solution type in which a synthetic rubber is dissolved in an organic solvent; and a latex type in which a synthetic rubber is dispersed in an aqueous medium, typically water) are preferably used.

As to the organic solvent: alicyclic solvents such as cyclohexane; ketones such as acetone: aliphatic solvents such as hexane: and mixtures thereof are preferably used from the viewpoints of solubility, workability, cost and influence on working environment.

Particularly, a chloroprene rubber-based solution type adhesive agent is preferred since it has an excellent adhesive strength and is also flexible and accordingly has a good resistance to bending and impact. The content of the chloroprene rubber in the adhesive agent is preferably in a range of from 25 to 35 % by weight. If the content is less than 25 % by weight, the adhesive strength tends to be lowered. If the content is more than 35 % by weight, it becomes difficult to coat because of high viscosity. of course, other known adhesive agents can be used in the present invention.

The adhesion of the noise damper 11 to the tread inner surface TS is preferably performed in such a manner as applying an adhesive agent to the entire surface 20 of the noise damper, but a spot adhesion manner is also adoptable.

As to the double-sided adhesive tape 30, on the other hand, (1) a carrier type tape 30A composed of a carrier material 31 such as a plastic film and unwoven fabric and an adhesive 32 on each side thereof as shown in Fig.7A, and (2) a transfer type tape 30B composed of an adhesive 32 only as shown in Fig.7B can be used. In the figures, numeral 33 is a release liner.

The transfer type tapes 30B are stretchable after applied, but the carrier type tapes 30A are less-stretchable. Therefore, the transfer type tapes 30B are preferred in order to prevent wrinkles due to the tape. From this point of view, the adhesive agents are also preferred.

In Fig.4 and Fig.5, it is preferable that a carrier type tape 30A is applied to the central portion Yc from the end to the end E, and a transfer type tape 30B is applied the side regions Ye as shown in Fig.5. In the divided parts of the side regions Ye, each release liner 33 is folded at the inner edge to form a strip extending beyond the side edge 11e for easy pull-out.

Firstly, gradually removing the release liner 33 of the central portion Yc, the central portion Yc is gradually adhered from one end E to the other end E. Then, removing the release liners 33 of the respective divided parts one after one, every divided part is adhered. Therefore, this damper can be easily and properly applied to the tread inner surface TS without wrinkles.

In order to improve the adhesive strength, a primer can be applied to the tread inner surface Ts and/or the joint surface 20 before adhering the damper material.

For example, the primer suitable for the tire is such that a synthetic rubber as the main component is dissolved in a solvent such as toluene, methyl ethyl ketone (MEK) or dimethylformamide (DMF).

The primer suitable for the noise damper is such that a synthetic rubber as the main component is dissolved in a solvent such as toluene, methyl ethyl ketone (MEK) or ethyl acetate.

In order to further improve the adhesive strength, the tread inner surface TS can be a smooth surface.

The pneumatic tire is vulcanized in a mold while pressurizing the inside of the tire by the use of an inflated bladder put in the tire. In general, the surface of the bladder is provided with vent grooves. Accordingly, rib-like projections corresponding to the vent grooves are formed on the inner surface of the vulcanized tire. If such rib-like projections decrease the adhesive strength, it is desirable to smoothen the inner surface, for example, by removing the existing projections by means of grinding and the like, or alternatively by the use of a bladder of which outer surface is provided with a smooth zone corresponding the position to which the damper is adhered.

As the mold releasing agent decreases the adhesive strength, it is preferable that the mold releasing agent is not used between the tire and bladder. But if the use of the releasing agent is avoidable, it is desirable to remove it by physical means such as buffing and/or chemical means such as organic solvent.

Comparison Tests

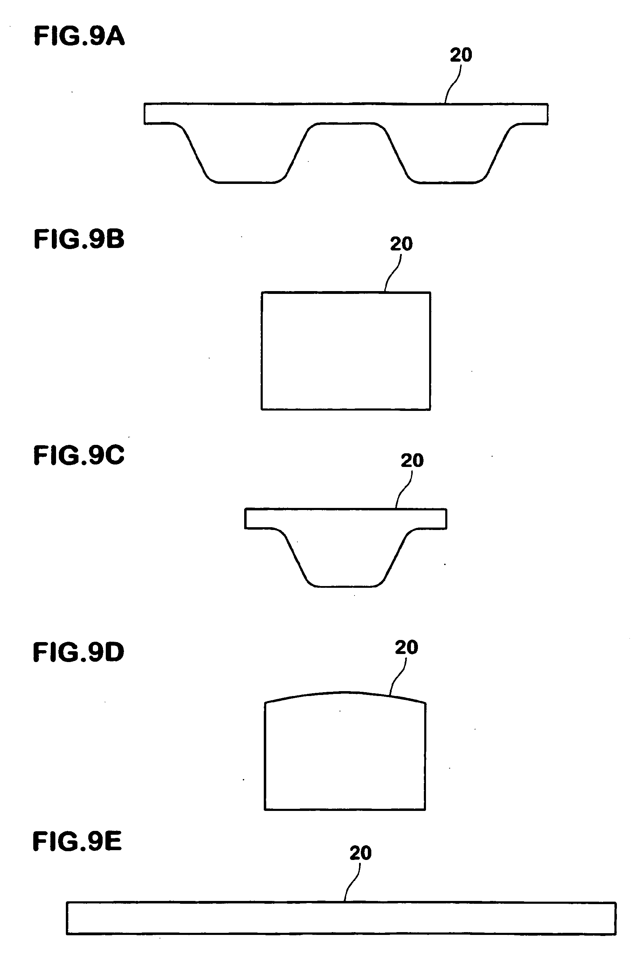

From an ether type polyurethane sponge (ESH2 made by Inoack corporation) having a specific gravity of 0.039, noise dampers having dimensions shown in Table 1 and cross sectional shapes shown in Figs.9A to 9E were prepared. They were attached to three types of motorcycle rear tires A, B and C by using an adhesive agent (No. 9383 made by NO-TAPE Industrial Co., Ltd.) and a carrier type double-sided adhesive tape (5000$_{NS}$ made by Nitto Denko corporation).

The generation of wrinkles during adhering the noise damper to the tread inner surface was checked, and the noise performance of the tire and the durability of the noise damper were evaluated.

1) wrinkle test

The noise dampers were adhered and visually observed if wrinkled and how wrinkled, and evaluated into three ranks as follows:

A: There was no wrinkle.
B: slight wrinkles by which the commercial value was not lost were observed.
C: Noticeable wrinkles by which the commercial value was lost were observed

2) Noise test

Using a tire test drum, the tire (type A) mounted on a rim of size 17xMT4.50 was run at a speed of 105 km/hour under the following conditions: tire pressure of 290 kPa, tire load of 1.86 kN and camber angle of 15 degrees, and the overall noise sound level (dB) was measured according to JASO c606.
Table 1 shows the results which are indicated as the difference from the sound level of control tire with no damper.

3) Durability test

using the tire test drum, the tire was run for 240 hours under the following conditions: tire pressure of 290 kPa, tire load of 1.86 kN speed of 100 km/hour, and camber angle of 0 degree, and the noise damper was visually checked for damage such as wear and breakage. The results are shown in Table 1.

Table 1

| Assembly | -- | Comp.1 | Comp.2 | Comp.3 | Comp.4 | Ex.1 | Ex.2 | Ex.3 | Ex.4 | Ex.5 | Ex.6 | Ex.7 | Ex.8 | Ex.9 | Ex.10 | Ex.11 | Ex.12 |
|---|---|---|---|---|---|---|---|---|---|---|---|---|---|---|---|---|---|
| Tire (Table 2)1 | A | A | A | A | A | A | A | A | A | A | A | A | A | A | A | B | C |
| Damper |  |  |  |  |  |  |  |  |  |  |  |  |  |  |  |  |  |  |
| Volume V2 (cc) | none 0 | 2438 | 2413 | 2414 | 3510 | 2895 | 2432 | 1737 | 772 | 965 | 965 | 3590 | 3474 | 3474 | 3474 | 3861 | 929 |
| V2/V1 | 0 | 13.1 | 12.9 | 12.9 | 18.8 | 15.5 | 13.0 | 9.3 | 4.1 | 5.2 | 19.2 | 18.6 | 18.6 | 18.6 | 18.6 | 13.7 | 16.1 |
| Material Form | -- | Ring | Strip | Strip | Strip | Strip | Strip | Strip | Strip | Strip | Strip | Strip | strip | strip | Strip | Strip | Strip |
| Length L (mm) | -- | 1950 *1 | 1930 | 1931 | 1950 | 1930 | 1930 | 1930 | 1930 | 1930 | 1930 | 1930 | 1930 | 1930 | 1930 | 1950 | 1720 |
| Sectional shape (Fig.) | -- | 9A | 9A | 9A | 9B | 9B | 9B | 9B | 9B | 9C | 9C | 9D | 9E | 9E | 9E | 9B | 9B |
| Sectional area (sq.mm) | -- | 1250 | 1250 | 1250 | 1800 | 1500 | 1260 | 900 | 400 | 500 | 500 | 1860 | 1800 | 1800 | 1800 | 1980 | 540 |
| Width W (mm) | -- | 100 | 100 | 100 | 60 | 50 | 42 | 30 | 20 | 42 | 42 | 80 | 150 | 150 | 150 | 66 | 36 |
| W/TW | -- | 58.8 | 58.8 | 58.8 | 35.3 | 29.4 | 24.7 | 17.6 | 11.8 | 24.7 | 24.7 | 47.1 | 88.2 | 88.2 | 88.2 | 24.4 | 24.7 |
| Thickness H (mm) | -- | 20 | 20 | 20 | 30 | 30 | 30 | 30 | 20 | 20 | 20 | 27 | 12 | 12 | 12 | 30 | 15 |
| H/W | -- | 0.2 | 0.2 | 0.2 | 0.5 | 0.6 | 0.71 | 1.0 | 1.0 | 0.48 | 0.48 | 0.33 | 0.08 | 0.08 | 0.08 | 0.45 | 0.42 |
| Test results |  |  |  |  |  |  |  |  |  |  |  |  |  |  |  |  |  |  |
| Wrinkle | -- | A | C | C | C | A | A | A | A | A | A | A | A | A | A | A | A |
| Noise (dB) | 0 | -2.4 | -2.4 | -2.4 | -2.6 | -2.5 | -2.4 | -2.2 | -1.2 | -1.6 | -1.6 | -2.6 | -2.6 | -2.6 | -2.6 | -- | -- |
| Durability | -- | wear | good | good | good | good | good | good | good | good | good | good | good | good | good | -- | -- |
| *1) Outer circumference | | | | | | | | | | | | | | | | | |

Table 2

| | Tire A | Tire B | Tire C |
|---|---|---|---|
| Tire size | 150/70ZR17 | 240/40R18 | 110/70R17 |
| Radius of curvature TR of tread | 90 mm | 220 mm | 50 mm |
| Tread width TW | 170 mm | 270 mm | 146 mm |
| Volume V1 of tire cavity | 18670 cc | 28230 cc | 5760 cc |

**Claims**

1.  A combination of a pneumatic tire (1) and a noise damper (11),
    said pneumatic tire comprising a tread portion (2) which is curved so that a tread face (2s) has a radius of curvature (TR) in a range of from 50 to 220 mm, and
    said noise damper (11) having a joint surface (20) to be adhered to the radially inner face (TS) of the tread portion (2), and made of a flexible material having a specific gravity of 0.005 to 0.060 and a length substantially equal to the inner circumference of the tire, wherein
    said joint surface (20) is substantially straight and has a width w more than 30 % of the width of the tread face (2s) measured along the tread face (2s), and
    the noise damper comprises:

    a thick central part having a substantially constant thickness; and
    a lateral part disposed on each side of the thick central part and having a substantially constant thickness less than said thickness of the central part,

    each of the lateral parts of the noise damper is provided along the length thereof with notches (24) at regular intervals, and
    the thick central part of the noise damper (11) has a thickness not more than the width w.

2.  The combination according to claim 1, wherein the noise damper has a volume not more than 20 % of the volume of the tire cavity.

3.  The combination according to claim 1, wherein
    the central part has a width of not more than 30 % of said width of the tread face.

4.  A noise damper for a pneumatic tire, comprising a main body made of a flexible material having a specific gravity of 0.005 to 0.060, and having a length of not less than the inner circumference of the tire and a joint surface to be adhered to the radially inner face of the tread portion, and an adhesive applied to said joint surface of the main body, wherein each edge of the noise damper is provided along the length thereof with notches so as to form a continuous central portion Yc, and a side portion Ye on each side thereof divided in the longitudinal direction of the damper.

5.  The noise damper according to claim 4, wherein the adhesive applied to said joint surface is a double-sided adhesive tape covered with release liners.

6.  The noise damper according to claim 4, wherein the adhesive applied to the continuous central portion Yc is a carrier type double-sided adhesive tape, and the adhesive applied to the side portion Ye is a transfer type double-sided adhesive tape.

**Patentansprüche**

1.  Kombination aus einem Luftreifen (1) und einem Geräuschdämpfer (11),
    wobei der Luftreifen einen Laufflächenabschnitt (2) umfasst, der derart gekrümmt ist, dass eine Laufflächenseite (2s) einen Krümmungsradius (TR) in einem Bereich von 50 bis 220 mm aufweist, und
    wobei der Geräuschdämpfer (11) eine Fügefläche (20) zur Klebung an die radial innere Seite (TS) des Laufflächenabschnitts (2) aufweist und aus einem flexiblen Material mit einem spezifischen Gewicht von 0,005 bis 0,060 und einer Länge im Wesentlichen gleich dem Innenumfang des Reifens hergestellt ist, wobei die Fügefläche (20) im Wesentlichen gerade ist und eine Breite (w) von mehr als 30 % der Breite der Laufflächenseite (2s), gemessen entlang der Laufflächenseite (2s), aufweist, und

wobei der Geräuschdämpfer umfasst:

einen dicken zentralen Teil mit einer im Wesentlichen konstanten Dicke; und

einen seitlichen Teil, der auf jeder Seite des dicken zentralen Teils angeordnet ist und eine im Wesentlichen konstante Dicke aufweist, die kleiner ist als die Dicke des zentralen Teils,

wobei jeder der seitlichen Teile des Geräuschdämpfers entlang seiner Länge in regelmäßigen Intervallen mit Kerben (24) versehen ist, und

der dicke zentrale Teil des Geräuschdämpfers (11) eine Dicke aufweist, die nicht größer ist als die Breite (w).

2. Kombination nach Anspruch 1, wobei der Geräuschdämpfer ein Volumen von nicht mehr als 20 % des Volumens des Reifenhohlraums aufweist.

3. Kombination nach Anspruch 1, wobei
der zentrale Teil eine Breite von nicht mehr als 30 % der Breite der Laufflächenseite aufweist.

4. Geräuschdämpfer für einen Luftreifen, der einen Hauptkörper umfasst, der aus einem flexiblen Material mit einem spezifischen Gewicht von 0,005 bis 0,060 hergestellt ist und eine Länge von nicht weniger als dem Innenumfang des Reifens und eine Fügefläche zur Klebung an die radial innere Seite des Laufflächenabschnitts aufweist, und einen Klebstoff umfasst, der auf die Fügefläche des Hauptkörpers aufgebracht ist, wobei jeder Rand des Geräuschdämpfers entlang seiner Länge mit Kerben versehen ist, um einen kontinuierlichen zentralen Abschnitt (Yc) und einen Seitenabschnitt (Ye) auf jeder Seite davon zu bilden, die in der Längsrichtung des Dämpfers unterteilt sind.

5. Geräuschdämpfer nach Anspruch 4, wobei der auf die Fügefläche aufgebrachte Klebstoff ein doppelseitiges Klebeband ist, das mit Ablöselagen bedeckt ist.

6. Geräuschdämpfer nach Anspruch 4, wobei der auf den kontinuierlichen zentralen Abschnitt (Yc) aufgebrachte Klebstoff ein doppelseitiges Klebeband vom Trägertyp ist, und der auf den Seitenabschnitt (Ye) aufgebrachte Klebstoff ein doppelseitiges Klebeband vom Transfertyp ist.

**Revendications**

1. Combinaison formée d'un bandage pneumatique (1) et d'un amortisseur de bruit (11),
ledit bandage pneumatique comprenant une portion formant bande de roulement (2) qui est incurvée de sorte qu'une face de roulement (2s) possède un rayon de courbure (TR) dans une plage de 50 à 220 mm, et
ledit amortisseur de bruit (11) possède une surface de jonction (20) destinée à adhérer sur la face radialement intérieure (TS) de la portion formant bande de roulement (2) et réalisée en un matériau flexible ayant une densité spécifique de 0,005 à 0,060 et une longueur sensiblement égale à la circonférence intérieure du pneumatique, dans laquelle
ladite surface de jonction (20) est sensiblement droite et présente une largeur w qui est supérieure à 30 % de la largeur de la face de roulement (2s) mesurée le long de la face de roulement (2s), et
l'amortisseur de bruit comprend :

une partie centrale épaisse ayant une épaisseur sensiblement constante ; et
une partie latérale disposée de chaque côté de la partie centrale épaisse et ayant une épaisseur sensiblement constante inférieure à ladite épaisseur de la partie centrale,
chacune des parties latérales de l'amortisseur de bruit est dotée le long de sa longueur d'encoches (24) à intervalles réguliers, et
la partie centrale épaisse de l'amortisseur de bruit (11) a une épaisseur qui n'est pas supérieure à la largeur w.

2. Combinaison selon la revendication 1, dans laquelle l'amortisseur de bruit a un volume qui ne dépasse pas 20 % du volume de la cavité du pneumatique.

**3.** Combinaison selon la revendication 1, dans laquelle la partie centrale a une largeur qui ne dépasse pas 30 % de ladite largeur de la face de roulement.

**4.** Amortisseur de bruit pour un bandage pneumatique, comprenant un corps principal réalisé en un matériau flexible ayant une densité spécifique de 0,005 à 0,060 et ayant une longueur qui n'est pas inférieure à la circonférence intérieure du pneumatique et une surface de jonction destinée à adhérer sur la face radialement intérieure de la portion formant bande de roulement, et un adhésif appliqué sur ladite surface de jonction du corps principal, dans lequel chaque bordure de l'amortisseur de bruit est pourvue le long de sa longueur d'encoches de manière à former une portion centrale continue Yc, et une portion latérale Ye sur chacun de ses côtés, divisée dans la direction longitudinale de l'amortisseur de bruit.

**5.** Amortisseur de bruit selon la revendication 4, dans lequel l'adhésif appliqué sur ladite surface de jonction est une bande adhésive double face couverte avec des doublages à peler.

**6.** Amortisseur de bruit selon la revendication 4, dans lequel l'adhésif appliqué sur la portion centrale continue Yc est une bande adhésive double face de type portante, et l'adhésif appliqué sur la portion latérale Ye est une bande adhésive double face du type à transfert.

# FIG.1

EP 1 745 947 B1

**FIG.2**

**FIG.3**

**FIG.4**

EP 1 745 947 B1

# FIG.5

EP 1 745 947 B1

**FIG.6**

**FIG.7**

**FIG.8**

**FIG.9A**

20

**FIG.9B**

20

**FIG.9C**

20

**FIG.9D**

20

**FIG.9E**

20

# FIG.10

EP 1 745 947 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6726289 B
- JP 7266814 A
- JP 2000127709 A